# EUROPÄISCHE PATENTSCHRIFT

(11) **EP 0 952 909 B1**
(45) Veröffentlichungstag und Bekanntmachung des Hinweises auf die Patenterteilung: **31.07.2002**
(21) Anmeldenummer: 98901341.2
(22) Anmeldetag: 07.01.1998
(51) Int. Cl.: B29C 44/34, B29C 33/10

(54) **VERFAHREN ZUR HERSTELLUNG GESCHÄUMTER POLYURETHAN-FORMKÖRPER**
PROCESS FOR MANUFACTURING POLYURETHANE FOAM MOULDINGS
PROCEDE DE FABRICATION DE CORPS MOULES EN MOUSSE DE POLYURETHANNE

(30) Priorität: 20.01.1997 DE 19701728
(43) Veröffentlichungstag der Anmeldung: 03.11.1999
(73) Patentinhaber: Hennecke GmbH, 51379 Leverkusen (DE)
(72) Erfinder: SULZBACH, Hans-Michael, D-53639 Königswinter (DE); WIRTH, Jürgen, D-51147 Köln (DE)
(74) Vertreter: Feldhues, Michael L.F., Dr.
(86) Internationale Anmeldenummer: EP9800032
(87) Internationale Veröffentlichungsnummer: WO9831522

(56) Entgegenhaltungen:
- EP-A- 0 120 449
- EP-A- 0 461 522
- WO-A-94/05486
- DE-A- 2 219 609
- DE-A- 3 020 793
- GB-A- 2 092 509
- US-A- 3 833 694
- US-A- 3 970 732
- US-A- 4 285 893

## Beschreibung

Die vorliegende Erfindung betrifft ein Verfahren gemäß dem Oberbegriff des Anspruchs 1 zur Herstellung geschäumter Polyurethan-Formkörper. Hierzu hat es bereits eine Reihe von Vorschlägen gegeben; siehe z.B. DE-A 15 04 278, DE-A 30 20 793 und EP-A 23 749.

Die Evakuierung der Form ist insbesondere erforderlich, um das in der Form befindliche Gas zur Vermeidung der Lunkerbildung aus der Form zu entfernen. Damit dies gelingt, ist es erforderlich, die Formhälften so zu gestalten, daß die Formtrennebene im höchsten Punkt des Formhohlraums liegt, da sich anderenfalls ein Nest bildet, aus dem das vorhandene Gas nicht mehr abgezogen werden kann. Dem könnte dadurch begegnet werden, daß das Formnest auf einen sehr niedrigen Druck von unterhalb 100 mbar, insbesondere unterhalb 50 mbar, vor dem Aufsteigen des Schaumes, d.h. bevor die Höhe des Schaumes im Formnest die Formtrennebene überschreitet, evakuiert wird. Ein solch niedriger Druck im Formnest führt aber dazu, daß der Schaum anfänglich derart schnell und stark expandiert, bevor noch wesentliche Treibmittelgehalte freigesetzt sind, daß nur eine unregelmäßige Schaumstruktur entsteht.

Ein weiterer Nachteil der Evakuierung über die Formtrennebene besteht darin, daß insbesondere wenn die expandierbare Reaktivmischung in die offene Form eingefüllt wird und erst nach Schließen der Form evakuiert wird, die Förderleistung über die Formtrennebene relativ gering ist, so daß sehr lange Zykluszeiten erforderlich sind.

Die Eigenschaften von Polyurethanschaum sind wesentlich durch die Rohdichte des fertigen Schaumes und die Materialeigenschaften der Matrix bestimmt. Insbesondere wenn Wasser als chemisches Treibmittel eingesetzt wird, wobei durch die Reaktion des Wassers mit dem Isocyanat Kohlendioxid freigesetzt wird, ist eine genaue Abstimmung der Rezeptur der expandierbaren Polyurethan-Reaktivmischung zur Einstellung der Matrix-Eigenschaften erforderlich. Daher ist es grundsätzlich wünschenswert, mit einer einzigen Rezeptur Schäume mit unterschiedlichen Rohdichten herstellen zu können. Zur Steuerung der Rohdichte eines Schaumes bei gleichzeitiger Beibehaltung der Rezeptur, insbesondere des Treibmittelgehaltes, ist eine Steuerung des Druckes in der Schäumform hervorragend geeignet, sieh z.B. EP-A 23 749 und EP-A 44 226.

Aufgabe der vorliegenden Erfindung ist es, bei kurzen Zyklus- bzw. Taktzeiten lunkerfreie Formteile mit geringerer Rohdichte als aufgrund des Treibmittelgehaltes bei Atmosphärendruck zu erwarten, herzustellen, wobei auch konturierte Formnester eingesetzt werden können, bei denen die Formtrennebene aus geometrischen Gründen nicht in die Stellen maximaler Höhe des Formnestes gelegt werden kann.

Erfindungsgemäß gelingt dies durch ein Verfahren gemäß Anspruch 1.

Vorzugsweise wird der Formhohlraum auf 400 bis 700 mbar absolut evakuiert.

Der Druckanstieg nach dem Steigen des Schaumes, d.h. im wesentlichen nach Freisetzung des gesamten Treibmittels erfolgt durch Temperaturerhöhung aufgrund der Reaktionswärme und gegebenenfalls geringer weiterer freigesetzter Treibmittelmengen. Er soll vorzugsweise auf einen Druck von 800 bis 900 mbar absolut erfolgen.

Das Einfüllen der expandierbaren Polyurethan-Reaktivmischung kann erfindungsgemäß ohne Nachteil für die Taktzeit in die offene Form erfolgen, da der gewünschte minimale Forminnendruck dem der expandierende Schaum ohne Nachteil ausgesetzt werden kann, innerhalb kürzester Zeit durch die erfindungsgemäß vorgesehene Absaugöffnung erreicht wird.

Zur Ausführung der erfindungsgemäßen Verfahrens dient eine Vorrichtung zur Herstellung von geschäumten Polyurethan-Formkörpern, die einen durch eine obere und untere Formhälfte, die durch eine Formtrennebene trennbar sind, definierten Formhohlraum aufweist, sowie Mittel zum Einfüllen einer expandierbaren Polyurethan-Reaktivmischung in die untere Formhälfte, wobei die Formtrennebene eine Vakuumdichtung aufweist, die obere Formhälfte eine verschließbare Absaugöffnung und die Stellen maximaler Höhe der oberen Formhälfte Expansionskanäle, deren Querschnitt so bemessen ist, daß sie durch Eindringen von noch nicht ausgehärteter Reaktivmischung verschließbar sind, sowie eine gemeinsame Unterdruckquelle und Verbindungsleitungen von der Unterdruckquelle zur Vakuumdichtung, Absaugöffnung und den Expansionskanälen.

Vorzugsweise wird die Unterdruckquelle in Form eines Unterdruckbehälters mit einem Vielfachen des Formhohlraumvolumens ausgebildet, wobei der Unterdruckbehälter an eine Vakuumpumpe angeschlossen ist.

Die Expansionskanäle können runden bzw. schlitzförmigen Querschnitt aufweisen. Vorzugsweise beträgt die geringere Querschnittsabmessung der Expansionskanäle 0,1 bis 0,5 mm, insbesondere bevorzugt 0,1 bis 0,3 mm.

Insbesondere bevorzugt werden die Expansionskanäle mit einem beispielsweise nadelförmigen Ausstoßkolben für das eingedrungene Polyurethan ausgerüstet. Weiter bevorzugt werden die Expansionskanäle durch Spalte zwischen einem größer dimensionierten Ausstoßkolben und dessen Durchführungsbohrung durch die obere Formhälfte gebildet.

Die Erfindung wird nachfolgend anhand der beigefügten Figuren näher erläutert.
Fig. 1 zeigt eine Vorrichtung zur Ausführung der erfindungsgemäßen Verfahrens
Fig. 2 zeigt die bevorzugte Ausführungsform der Expansionskanäle
Fig. 3 zeigt die erfindungsgemäßen zeitlichen Druckverlauf in der Form.

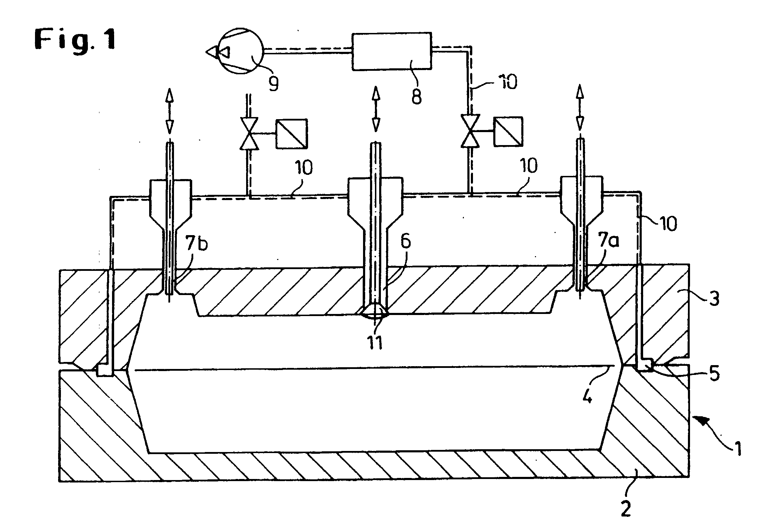

Fig. 1 zeigt eine Form 1, die aus einer unteren Formhälfte 2 und einer oberen Formhälfte 3 besteht, wobei die Formhälften durch die Formtrennebene 4 getrennt sind. In der Formtrennebene ist ein umlaufender Kanal 5 als Vakuumdichtung vorgesehen. Die obere Formhälfte weist ferner eine Absaugöffnung 6 auf, die beispielsweise durch den Verschlußkegel 11 bei Erreichen des gewünschten Forminnendrucks verschließbar ist. Ferner sind an den Stellen maximaler Höhe des Forminnenraums Expansionskanäle 7a und 7b vorgesehen. Vakuumdichtung 5, Absaugöffnung 6 und Expansionskanäle 7a und 7b sind über entsprechende Leitungen 10 mit dem chematisch verkleinert dargestellten Vakuumbehälter 8 verbunden, aus dem über die Vakuumpumpe 9 Gas abgesaugt wird.

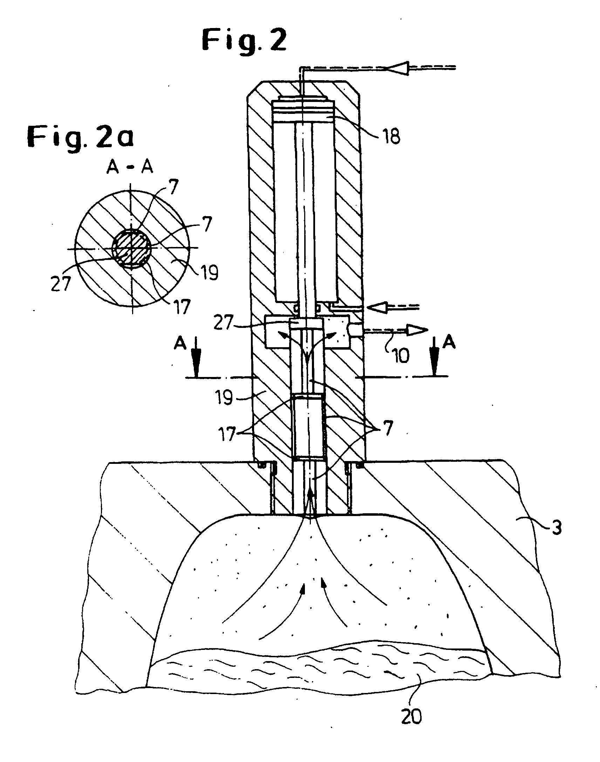

Fig. 2 zeigt im Schnitt den Abschnitt einer oberen Formhälfte 3 mit maximaler Höhe des Forminnenraumes. Der Expansionskanal 7 ist in Form von Abflachungen des mittels einer Hydraulikeinrichtung 18 ausstoßbaren Kolbens 27 ausgebildet. Dabei ist der Expansionskanal abschnittsweise über den Umfang des Ausstoßkolbens 27 versetzt, wobei die versetzten Expansionskanalabschnitte über umlaufende Nuten 17 miteinander verbunden sind. Während des Steigens des Schaums 20 wird durch die Expansionskanäle und über die Verbindungsleitung 10 zur Vakuumquelle weiter Gas aus dem Forminnenraum abgezogen, so daß der niedrige Forminnendruck erhalten bleibt. Erreicht der expandierende Schaum die Expansionskanäle 7, dringt er in diese, diese gleichzeitig verschließend, ein. Nach dem Entformen des Formschaumteils wird der Ausstoßkolben 27 mittels der Hydraulik 18 aus der Hülse 19 herausgefahren, so daß in die Expansionskanäle 7 eingedrungenes Polyurethan entfernt werden kann.

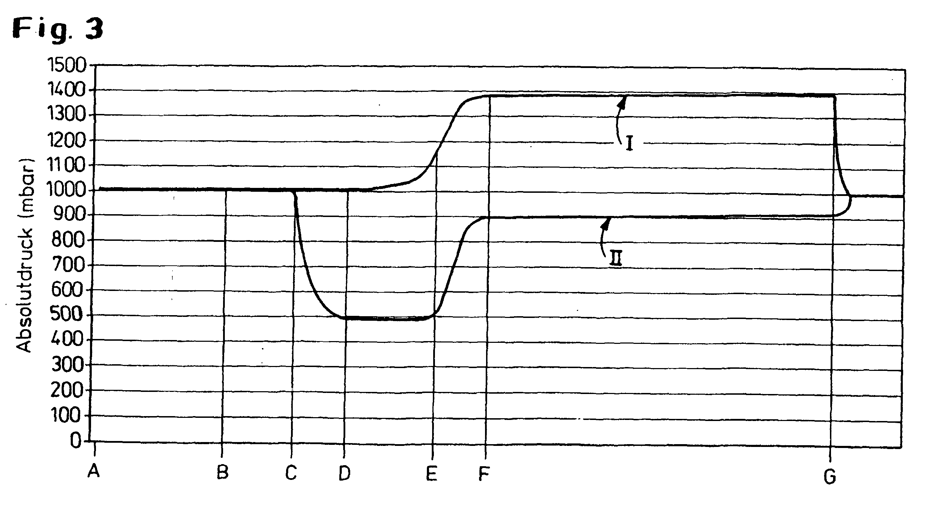

Fig. 3 zeigt beispielhaft den Druckverlauf innerhalb der Form bei einem konventionellen (I) und erfindungsgemäßen (II) Verfahren zur Formschaumherstellung.

Dabei werden die folgenden Phasen durchlaufen:
A: Beginn des Eintrags der expandierbaren Polyurethan-Reaktivmischung in die offene Form.
B: Eintrag ist beendet; Beginn der Startzeit; Schließen der Form.
C: Form ist geschlossen, schneller Druckabfall durch Evakuierung über die Absaugöffnung (erfindungsgemäß).
D: Der gewünschte Forminnendruck von hier 500 mbar absolut ist erreicht; Übergang von Startzeit zu Steigzeit.
E: Der Schaum erfüllt die Form; Ende der Steigzeit; Beginn der Nachdruckzeit. Beim konventionellen Formschäumprozeß (I) ist aufgrund des Widerstandes des verdrängten Gases durch den aufsteigenden Schaum bereits ein merklicher Druckanstieg innerhalb der Form festzustellen.
F: Der maximale Forminnendruck, der dem maximalen Innendruck der Schaumzellen entspricht, ist erreicht.
G: Öffnen der Form und Entnahme des Formteils.

## Patentansprüche

1. Verfahren zur Herstellung geschäumter Polyurethan-Formkörper durch Einfüllen einer expandierbaren Polyurethan-Reaktivmischung in die untere Formhälfte einer durch eine Formtrennebene geteilten Form, Evakuieren der Form, wobei die Formtrennebene eine Unterdruckdichtung aufweist, **dadurch gekennzeichnet, dass** der Formhohlraum durch eine in der oberen Formhälfte vorgesehene verschließbare Absaugöffnung schnell auf einen Druck von 300 bis 700 mbar absolut evakuiert wird, die Absaugöffnung verschlossen wird, wobei die Reaktivmischung den Formhohlraum ausfüllend expandiert, die expandierende Mischung in an der oder an den Stellen maximaler Höhe des Formhohlraums vorgesehene Expansionskanäle mit geringem Querschnitt eindringt, so dass sich diese verschließen, wobei Unterdruckdichtung, Absaugöffnung und Expansionskanäle an dieselbe Unterdruckquelle angeschlossen sind, und wobei die Evakuierung des Formhohlraums in Abhängigkeit von der Rezeptur der expandierbaren Polyurethan-Reaktivmischung auf einen solchen Druck erfolgt, dass der Forminnenenddruck 800 bis 1100 mbar beträgt.

2. Verfahren nach Anspruch 1, **dadurch gekennzeichnet, dass** der Forminnenenddruck 800 bis 900 mbar beträgt.

## Claims

1. Process for the production of shaped. foamed polyurethane articles by introducing an expandable polyurethane reactive mixture into the lower mould half of a mould divided by a parting plane and evacuation of the mould, the parting plane having a vacuum seal, **characterised in that** the mould cavity is evacuated rapidly through a closable suction opening provided in the upper mould half to a pressure of 300 to 700 mbar absolute, the suction opening is closed, the reaction mixture expanding to fill the mould cavity and the expanding mixture penetrating into expansion channels which are provided at the point or points of maximum height of the mould cavity and have a small cross-section so that they close, the vacuum seal, suction opening and expansion channels being connected to the same vacuum source, and the evacuation of the mould cavity taking place as a function of the formula of the expandable polyurethane reactive mixture to a pressure such that the internal pressure in the mould is 800 to 1,100 mbar.

2. Process according to claim 1, **characterised in that** the internal pressure of the mould is 800 to 900 mbar.

## Revendications

1. Procédé de fabrication de corps moulés en polyuréthane expansé par introduction d'un mélange réactif de polyuréthane expansible dans la moitié inférieure d'un moule divisé par un plan de séparation du moule, mise sous vide du moule, où le plan de séparation du moule comporte un organe d'étanchéité à pression négative, **caractérisé en ce que** la cavité du moule est mise rapidement sous vide à une pression de 300 à 700 mbar absolus par une ouverture d'aspiration obturable prévue dans la moitié supérieure du moule, l'ouverture d'aspiration est fermée, le mélange réactif s'expanse en remplissant la cavité du moule, le mélange en expansion pénètre dans des canaux d'expansion de petite section droite prévus au(x) point(s) de hauteur maximale de la cavité du moule, de sorte que ceux-ci sont obturés, l'organe d'étanchéité à pression négative, l'ouverture d'aspiration et les canaux d'expansion étant raccordés à la même source de pression, et la mise sous vide de la cavité du moule se déroulant en fonction de la formulation du mélange réactif de polyuréthane expansible à une pression telle que la pression interne du moule est de 800 à 1100 mbar.

2. Procédé selon la revendication 1, **caractérisé en ce que** la pression interne du moule est de 800 à 900 mbar.
